# FASCICULE DE BREVET EUROPEEN

(11) **EP 3 252 335 B1**
(45) Date de publication et mention de la délivrance du brevet: **10.07.2019**
(21) Numéro de dépôt: 17170701.1
(22) Date de dépôt: 11.05.2017
(51) Int. Cl.: F16D 25/08, F16D 25/12, F16D 21/06

(54) **SYSTÈME DE REFROIDISSEMENT POUR MÉCANISME D'EMBRAYAGE**
KÜHLSYSTEM FÜR KUPPLUNGSMECHANISMUS
COOLING SYSTEM FOR CLUTCH MECHANISM

(30) Priorité: 31.05.2016 FR 1654937
(43) Date de publication de la demande: 06.12.2017
(73) Titulaire: Valeo Embrayages, 80009 Amiens Cedex 2 (FR)
(72) Inventeur: DOLE, Arnaud, 80009 Amiens (FR); THIBAUT, François, 80009 Amiens (FR); KIM, Taemann, 80009 Amiens (FR); MANCEAU, Bruno, 80009 Amiens (FR)
(74) Mandataire: Vincent, Catherine Marie Marguerite

(56) Documents cités:
- DE-A1-102011 014 778
- DE-A1-102014 205 506
- DE-A1-102014 209 618

## Description

### Domaine technique

La présente invention concerne un mécanisme d'embrayage, et plus particulièrement un système de refroidissement et de lubrification d'un tel mécanisme d'embrayage. Elle se situe dans le domaine de la transmission notamment pour véhicules automobiles.

### État de la technique antérieure

On connait de l'art antérieur des mécanismes d'embrayage comprenant :
- un moyeu d'entrée moteur, pouvant être raccordé à un arbre d'entrée moteur,
- un moyeu de sortie pouvant être connecté à une transmission,
- un embrayage multidisques supporté par un support d'embrayage, l'embrayage multidisque comprenant :
   - une pluralité de premiers éléments de friction liés solidairement en rotation à l'arbre d'entrée par l'intermédiaire d'un porte-disques d'entrée et du moyeu d'entrée,
   - une pluralité de deuxièmes éléments de friction liés solidairement en rotation à l'arbre de sortie par l'intermédiaire d'un porte-disques de sortie et du moyeu de sortie,
- un système de commande comprenant un carter et un actionneur agencé pour configurer l'embrayage dans une position comprise entre :
   - une configuration embrayée pour laquelle la pluralité des premiers éléments de friction de l'embrayage est couplée en rotation à la pluralité des deuxièmes éléments de friction dudit embrayage, et
   - une configuration débrayée pour laquelle la pluralité des premiers éléments de friction de l'embrayage est découplée en rotation à la pluralité des deuxièmes éléments de friction dudit embrayage.

Durant leur fonctionnement, les efforts frictionnels générés au niveau de l'embrayage multidisques génèrent des échauffements, notamment durant la phase transitoire d'engagement frictionnel de l'embrayage durant laquelle il existe une vitesse de rotation différentielle non nulle entre les premiers éléments de friction et les deuxièmes éléments de friction.

Afin de garantir un fonctionnement optimal et durable du mécanisme d'embrayage, et de limiter l'usure prématurée des premiers et deuxièmes éléments de friction, on connait notamment l'usage d'un fluide de refroidissement permettant à la fois de lubrifier et de refroidir l'embrayage durant son fonctionnement. Dans le document EP 2 905 492 A2, le fluide de refroidissement est introduit dans le mécanisme d'embrayage par un conduit de refroidissement traversant le support d'embrayage.

Afin d'orienter le fluide de refroidissement vers l'embrayage, le conduit de refroidissement comprend souvent des formes complexes tenant compte de l'encombrement disponible dans le mécanisme d'embrayage et de sa géométrie. Plus particulièrement, le support d'embrayage comprend de manière connue un premier alésage borgne d'élongation axiale permettant au fluide de refroidissement d'être introduit dans le mécanisme d'embrayage, et un deuxième alésage borgne d'extension radiale permettant au fluide de refroidissement de circuler dans le mécanisme d'embrayage, le deuxième alésage débouchant dans le premier alésage borgne.

La réalisation d'un tel conduit de refroidissement est ainsi complexe et nécessite un usinage en plusieurs opérations afin d'assurer la communication fluidique entre le premier et le deuxième alésage. Plus particulièrement, il est nécessaire de reprendre manuellement l'usinage des deux alésages, de réaliser un ébavurage à l'intersection des deux alésages pour garantir une circulation optimale du fluide de refroidissement dans le conduit de refroidissement d'une part, et dans le mécanisme d'embrayage d'autre part. Ainsi, les configurations connues de conduits de refroidissement mettent en oeuvre des procédés de fabrication lourds et complexes qui participent à l'augmentation des couts de fabrication des mécanismes d'embrayage.

La présente invention a pour objet de répondre au moins en grande partie aux problèmes précédents et de conduire en outre à d'autres avantages qui apparaitront au travers de la description et des figures qui suivent. Un autre but de l'invention est de proposer un nouveau mécanisme d'embrayage pour résoudre au moins un de ces problèmes.

Un autre but de la présente invention est de simplifier la fabrication d'un mécanisme d'embrayage et d'en réduire le coût.

Un autre but de la présente invention est de réduire l'encombrement d'un mécanisme d'embrayage. Le document DE 102011014778 A1, qui est considéré comme étant l'état de la technique le plus proche de l'objet de la revendication 1 indépendante, décrit un mécanisme d'embrayage tel que définit dans l'introduction de la revendication 1.

### Exposé de l'invention

Selon un premier aspect de l'invention, on atteint au moins l'un des objectifs précités avec un mécanisme d'embrayage destiné à être installé entre un moteur et une transmission de véhicule automobile, ledit mécanisme comprenant (i) au moins un embrayage, (ii) un système de commande comprenant un carter et au moins un piston annulaire agencé pour se déplacer axialement par rapport au carter afin d'embrayer ou débrayer l'embrayage par l'intermédiaire d'au moins un palier de transmission, (iii) un support d'embrayage agencé pour supporter radialement l'embrayage par l'intermédiaire d'un palier support, le support d'embrayage étant situé dans une position axialement intermédiaire entre ledit système de commande et un moyeu de sortie du mécanisme d'embrayage, (iv) au moins un conduit de refroidissement agencé pour faire circuler un fluide de refroidissement vers l'embrayage, chaque conduit de refroidissement comprenant une partie d'extension axiale et au moins une partie d'extension radiale, la partie d'extension axiale de chaque conduit de refroidissement étant située radialement entre un arbre de transmission et une face intérieure du support d'embrayage, et au moins une partie d'extension radiale de chaque conduit de refroidissement étant située axialement entre le palier support et le moyeu de sortie.

Selon son premier aspect, l'invention permet astucieusement de tirer profit de l'architecture coaxiale d'un mécanisme d'embrayage afin de dégager un espace radial entre l'arbre de la transmission et le support d'embrayage pour y faire circuler le fluide de refroidissement, et plus particulièrement pour introduire le fluide de refroidissement depuis l'extérieur du mécanisme d'embrayage vers l'intérieur du mécanisme d'embrayage.

En complément, la partie d'extension radiale est astucieusement conçue pour déboucher dans cet espace. Axialement, la partie d'extension radiale est située entre le palier support et le moyeu de sortie de manière à orienter le fluide de refroidissement vers l'embrayage de la manière la plus directe possible afin d'améliorer son refroidissement et/ou sa lubrification.

Cette configuration originale permet ainsi de réduire le nombre d'opérations d'usinage dans le support d'embrayage, en comparaison avec l'art antérieur.

L'invention conforme à son premier aspect permet ainsi de simplifier les procédés de fabrication et de réduire les coûts rattachés.

Par ailleurs, la présente invention conforme à son premier aspect permet aussi de réduire les dimensions radiales du support d'embrayage puisqu'il n'est plus nécessaire de faire passer au travers de ce dernier un conduit d'élongation axiale permettant de faire circuler le liquide de refroidissement. La présente invention permet donc de limiter l'encombrement radial du mécanisme d'embrayage en augmentant le volume intérieur libre situé radialement entre le support d'embrayage et l'embrayage, voire de réduire les dimensions radiales d'un tel mécanisme d'embrayage.

Le mécanisme d'embrayage conforme au premier aspect de l'invention comprend préférentiellement un embrayage humide ou sec.

De manière avantageuse, le mécanisme conforme au premier aspect de l'invention comprend deux embrayages multidisques, préférentiellement humide, le système de commande comprenant un premier et un deuxième pistons annulaires, agencés respectivement pour coupler ou découpler le premier et le deuxième embrayage sur un premier ou un deuxième arbre de la transmission par l'intermédiaire d'un premier et deuxième moyeu de sortie.

Chaque embrayage multidisques comprend d'une part une pluralité de premiers éléments de friction, tels que par exemple des flasques, liés solidairement en rotation à l'arbre d'entrée par l'intermédiaire d'un porte-disques d'entrée et d'un moyeu d'entrée, et d'autre part une pluralité de deuxièmes éléments de friction, tels que par exemples des disques de friction, liés solidairement en rotation à au moins l'un des arbres de transmission par l'intermédiaire d'un premier ou deuxième organe de transmission de force et d'un premier ou deuxième moyeu de sortie.

Les premier et deuxième organes de transmission de force sont agencés pour transmettre un effort axial généré par les premier et deuxième pistons annulaires du système de commande aux deuxièmes éléments de friction.

Alternativement, la pluralité de flasques est liée en rotation à au moins l'un des arbres de transmission par l'intermédiaire du premier ou deuxième organe de transmission de force et d'un premier ou deuxième moyeu de sortie et la pluralité de disques de friction est liée en rotation à l'arbre d'entrée par l'intermédiaire d'un porte-disques d'entrée et d'un moyeu d'entrée.

Le système de commande est agencé pour configurer chaque embrayage dans une position comprise entre :
- une configuration embrayée pour laquelle la pluralité des premiers éléments de friction est couplée en rotation à la pluralité des deuxièmes éléments de friction, et
- une configuration débrayée pour laquelle la pluralité des premiers éléments de friction est découplée en rotation à la pluralité des deuxièmes éléments de friction.

Chaque embrayage est préférentiellement configuré dans une position différente de l'autre : si le premier embrayage est configuré dans la position embrayée, alors le deuxième embrayage est préférentiellement configuré dans la configuration débrayée ; et si le premier embrayage est configuré dans la position débrayée, alors le deuxième embrayage est préférentiellement configuré dans la position embrayée.

Éventuellement, les premier et deuxième embrayages peuvent simultanément être configurés dans la position débrayée.

De manière avantageuse, dans un mécanisme d'embrayage conforme au premier aspect de l'invention, le système de commande est préférentiellement hydraulique ou pneumatique, le piston annulaire étant monté axialement coulissant sur le carter.

Le piston se déplace axialement par rapport au carter de manière à embrayer ou débrayer l'embrayage correspondant, par exemple par un couplage frictionnel au niveau des premiers et deuxièmes éléments de friction de l'embrayage, menant finalement à un couplage en rotation de l'arbre d'entrée avec un des arbres de la transmission.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale.

De manière préférentielle, un mécanisme conforme au premier aspect de l'invention peut comprendre alternativement ou complémentairement au moins un des premiers perfectionnements ci-dessous pris éventuellement en combinaison :
- chaque embrayage comprend une pluralité d'éléments de friction liés solidairement en rotation à un arbre d'entrée, la partie d'extension radiale étant située axialement dans un plan perpendiculaire à l'axe O et passant par au moins une partie de la pluralité d'éléments de friction afin de faciliter la propagation du fluide de refroidissement en direction de chaque embrayage lorsque ceux-ci sont en rotation autour de l'axe O. En d'autres termes, la partie d'extension radiale est située axialement à l'aplomb d'au moins une partie de la pluralité d'éléments de friction ;
- une extrémité extérieure de la partie d'extension radiale est axialement située entre un porte-disque de sortie et un porte-disque d'entrée afin de favoriser le transfert du fluide de refroidissement entre chaque conduit de refroidissement et l'embrayage ;
- la partie d'extension radiale est orientée en direction des éléments de friction de l'embrayage de manière à optimiser l'écoulement du fluide au travers des premiers et deuxièmes éléments de friction
- une extrémité extérieure de la partie d'extension radiale est axialement plus éloignée de la transmission qu'une extrémité intérieure de la partie d'extension radiale, de sorte que l'extrémité extérieure de la partie d'extension radiale est orientée sensiblement dans une direction opposée à une face d'appui du carter sur la transmission par rapport à une extrémité intérieure de la partie d'extension radiale ;
- la partie d'extension radiale est orientée selon un angle compris entre -45° et +45° par rapport à un axe perpendiculaire à l'axe de rotation O ;
- caractéristique non couverte par les revendications : la partie d'extension radiale est formée par un palier d'appui axial en appui axial contre le support d'embrayage et le moyeu de sortie ;
- la partie d'extension radiale est alternativement ou complémentairement formée par :
   ∘ au moins un alésage traversant de part en part et ménagé dans le support d'embrayage. Préférentiellement, l'alésage traversant débouche à une première extrémité sur la partie intérieure du support d'embrayage et, à une deuxième extrémité, sur la partie extérieure du support d'embrayage, permettant ainsi au fluide de refroidissement de circuler entre la partie d'extension axiale et l'embrayage ;
   ∘ caractéristique non couverte par les revendications : au moins un alésage radial traversant de part en part dans le palier d'appui axial, l'alésage découchant vers l'intérieur dans la partie d'extension axiale du conduit de refroidissement afin de permettre au fluide de refroidissement de circuler entre la partie d'extension axiale et l'embrayage. Alternativement, le palier d'appui axial comprend au moins un conduit radial traversant de part et en part et débouchant vers l'intérieur dans la partie d'extension axiale du conduit de refroidissement. Vers l'extérieur, l'alésage radial et/ou le conduit radial débouche sur la face extérieure du palier d'appui radial afin de permettre au fluide de refroidissement circulant dans la partie d'extension axiale d'être transféré vers l'embrayage. Éventuellement, le fluide de refroidissement circulant au travers du palier d'appui axial passe au travers d'une cage de guidage des billes ou des rouleaux ou des aiguilles afin de permettre de lubrifier le palier d'appui axial simultanément au transfert du fluide de refroidissement entre la partie d'extension axiale et l'embrayage ;
   ∘ caractéristique non couverte par les revendications : au moins une bague annulaire située entre le support d'embrayage et le moyeu de sortie. La bague annulaire peut être située entre le palier d'appui axial et le support d'embrayage ou entre le palier d'appui axial et le moyeu de sortie. Éventuellement, le mécanisme d'embrayage comprend deux bagues annulaires situées de part et d'autre du palier d'appui axial ;
   ∘ caractéristique non couverte par les revendications : au moins un conduit traversant de part en part la bague annulaire, le conduit débouchant vers l'intérieur dans la partie d'extension axiale du conduit de refroidissement afin de permettre une communication fluidique entre la partie d'extension axiale et l'embrayage. Le nombre et/ou le diamètre du conduit d'extension radiale dépend du débit souhaité et/ou de la viscosité du fluide de refroidissement ;
- le palier axial est du type à aiguilles ;
- les conduits d'extensions radiales de la bague annulaire sont angulairement régulièrement répartis autour de l'axe O afin de favoriser la répartition du fluide de refroidissement au niveau de l'embrayage lors de son fonctionnement, et plus particulièrement durant sa rotation autour de l'axe O ;
- la partie d'extension radiale située entre le palier support et le moyeu de sortie est une première partie d'extension radiale, le conduit de refroidissement comprenant une deuxième partie d'extension radiale située entre le palier support et le système de commande afin de permettre une meilleure distribution radiale du fluide de refroidissement au niveau de l'embrayage en fonction des dimensions de l'embrayage. En effet, dans le cas d'un embrayage axialement étendu, il peut être souhaitable de projeter radialement le fluide de refroidissement à plusieurs positions axiales pour un meilleur refroidissement et/ou une meilleure lubrification de l'embrayage ;
- la deuxième partie d'extension radiale est formée par un alésage traversant ménagé dans le support d'embrayage ;
le porte-disques d'entrée du mécanisme d'embrayage comprend au moins une ouverture radiale située dans un plan perpendiculaire à l'axe O et passant par moins une partie de la pluralité des éléments de friction afin de permettre une meilleure communication fluidique du fluide de refroidissement sortant radialement au niveau de la deuxième partie d'extension radiale vers l'embrayage. Plus particulièrement, l'ouverture radiale est située à l'aplomb d'au moins une partie de la pluralité des éléments de friction. De manière complémentaire ou alternative, un mécanisme conforme au premier aspect de l'invention ou à l'un quelconque de ses premiers perfectionnements peut comprendre alternativement ou complémentairement au moins un des deuxièmes perfectionnements ci-dessous pris éventuellement en combinaison :
- le support d'embrayage est agencé pour transmettre un effort axial généré au niveau du ou des pistons annulaires, notamment lorsque ce dernier se déplace axialement pour embrayer l'embrayage. Pour ce faire, le support d'embrayage est bloqué axialement dans une position comprise axialement entre le système de commande et le moyeu de sortie de l'embrayage.
- du côté du moyeu de sortie et du moteur, le support d'embrayage est en appui axial contre le moyeu de sortie, par l'intermédiaire d'au moins un palier axial.
- du côté du système de commande, le support d'embrayage est en appui axial contre la transmission ou est fixé solidairement au système de commande de manière à pouvoir transmettre un effort axial.
- le support d'embrayage est agencé pour supporter radialement le poids de l'embrayage, par l'intermédiaire d'un palier support, et plus particulièrement d'un palier à roulements à contacts obliques afin de pouvoir transmettre à la fois un effort radial et un effort axial. Le palier support est arrêté axialement par un anneau d'arrêt disposé du côté opposé à l'effort axial exercé par le piston annulaire. En d'autres termes, l'anneau d'arrêt est situé axialement entre le palier support et le moyeu de sortie de l'embrayage. Radialement, le palier support est disposé entre le support d'embrayage et l'embrayage. Cette configuration permet astucieusement de réduire les dimensions radiales du palier, ce dernier étant porté radialement au plus proche de l'axe de rotation O, réduisant ainsi les efforts supportés et l'usure du palier support ;
- de préférence, le palier support est un roulement à billes à contacts obliques ;
- le carter du système de commande de l'embrayage présente une face plane agencée pour venir en appui axial sur la transmission. La collaboration de la face plane du carter avec une face en regard de la transmission forme le premier élément de blocage axial, et plus particulièrement sous la forme d'un élément d'arrêt axial ;
- le carter du système de commande peut être réalisé en plusieurs pièces. Notamment, le système de commande peut comprendre un support d'actionnement rapporté sur le carter et situé axialement entre le carter et le moyeu de sortie. D'une manière générale, le carter désigne une pièce mécanique de la transmission qui est suffisamment rigide pour pouvoir par exemple coupler en rotation et/ou axialement le système de commande sur la transmission. Alternativement, le support d'actionnement peut être serti dans un alésage du système de commande, permettant de réaliser un couplage en rotation entre ledit support d'actionnement et ledit système de commande. Dans ces variantes de réalisation par assemblage ou sertissage, le support d'actionnement est au moins couplé en rotation avec le carter. Éventuellement, le support d'actionnement peut être monté avec un jeu axial vis-à-vis de la transmission afin de garantir que le blocage axial entre le système de commande et la transmission soit réalisé au niveau dudit système de commande. De cette manière, les tolérances dimensionnelles axiales du support d'actionnement sont faibles, permettant ainsi de fabriquer ledit support d'actionnement à moindre coût. Éventuellement encore, le support d'actionnement peut être monté dans un alésage du système de commande et sans jeu radial avec ledit système de commande. Préférentiellement, ce montage sans jeu est réalisé en force et permet de réaliser un couplage en rotation entre ledit support d'actionnement et ledit système de commande ;
- Alternativement, le support d'actionnement est issu de matière avec le carter du système de commande ;
- le support d'actionnement et/ou le carter sont de préférence en matériau métallique tel que de l'acier ou de l'aluminium, ou éventuellement en matière plastique ;
- dans le cas où le système de commande comprend un support d'actionnement rapporté sur le carter, alors les moyens de couplage en rotation sont préférentiellement situés radialement entre le support d'actionnement et le support d'embrayage. De manière comparable, dans le cas où le système de commande comprend un support d'actionnement rapporté sur le carter, alors l'élément de couplage axial est préférentiellement situé radialement entre le support d'actionnement et le support d'embrayage ;

Selon un deuxième aspect de l'invention, il est proposé un système de transmission pour véhicule automobile comprenant un mécanisme d'embrayage conforme au premier aspect de l'invention ou à l'un quelconque de ses perfectionnements et couplé en rotation à un arbre d'entrée par au moins un vilebrequin.

Avantageusement, le mécanisme d'embrayage est couplé en rotation à l'arbre d'entrée par l'intermédiaire d'un amortisseur de vibrations de torsion.

De manière préférentielle, le système de transmission conforme au deuxième aspect de l'invention comprend (i) une enceinte étanche dans laquelle est logé le mécanisme d'embrayage, (ii) une pompe agencée d'une part pour pomper le fluide de refroidissement contenu dans l'enceinte étanche, et d'autre part pour injecter le fluide de refroidissement dans le conduit de refroidissement, et (iii) un élément de filtration agencé pour filtrer le fluide de refroidissement pompé par la pompe avant d'être réinjecté dans le conduit de refroidissement.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

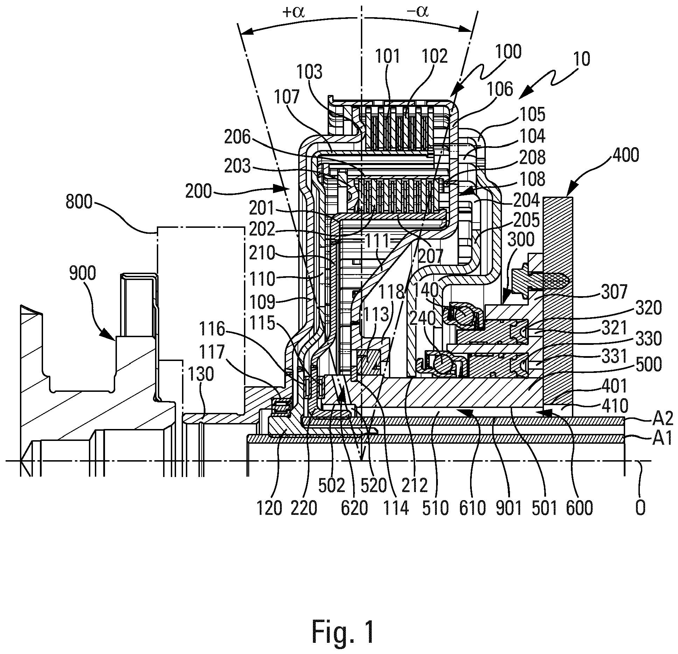

- la FIGURE 1 illustre une vue en coupe axiale d'un système de transmission comprenant un mécanisme à double embrayage humide conforme au premier aspect de l'invention et selon un premier mode de réalisation dans lequel le conduit de refroidissement comprend une partie d'extension radiale située entre le palier support et le moyeu de sortie ;

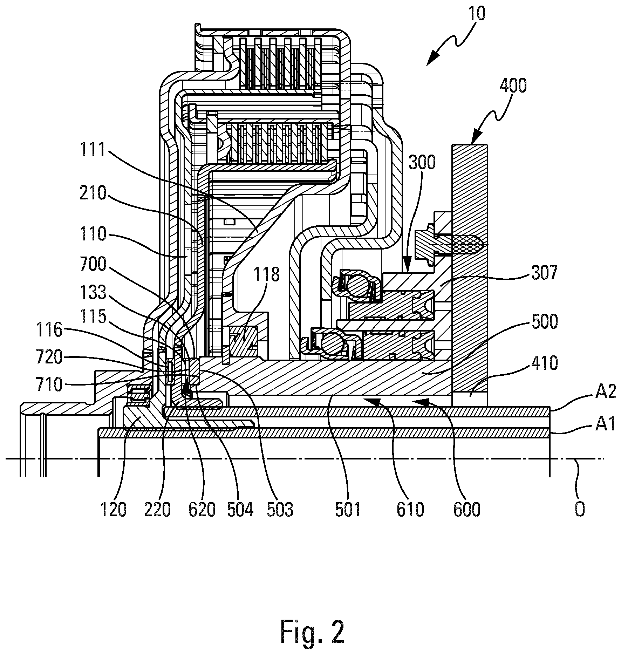

- la FIGURE 2 illustre, une vue en coupe axiale d'un système de transmission comprenant un mécanisme à double embrayage humide conforme au premier aspect de l'invention et selon un deuxième mode de réalisation dans lequel une bague intermédiaire jouant le rôle de palier axial est localisée entre le support d'embrayage et le moyeu de sortie, la bague intermédiaire comprenant des conduits radiaux ;

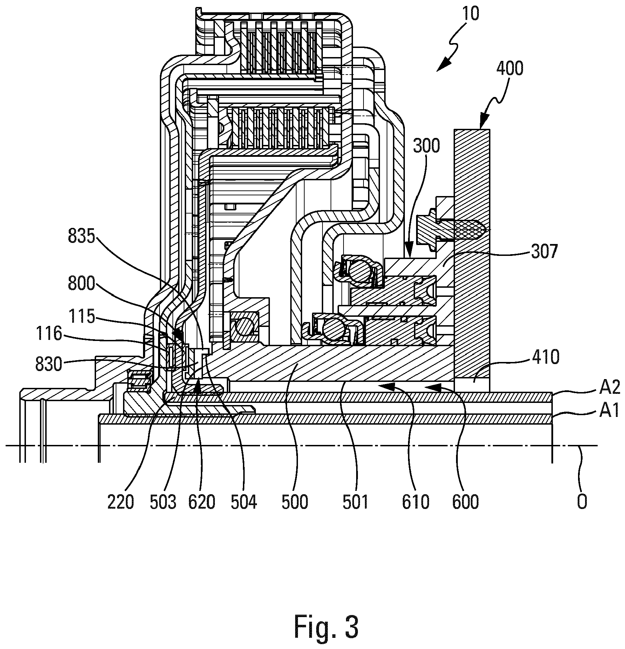

- la FIGURE 3 illustre une vue en coupe axiale d'un système de transmission comprenant un mécanisme à double embrayage humide conforme au premier aspect de l'invention et selon un troisième mode de réalisation dans lequel le palier axial situé entre le support d'embrayage et le moyeu de sortie comprend une partie d'extension radiale du conduit de refroidissement ;

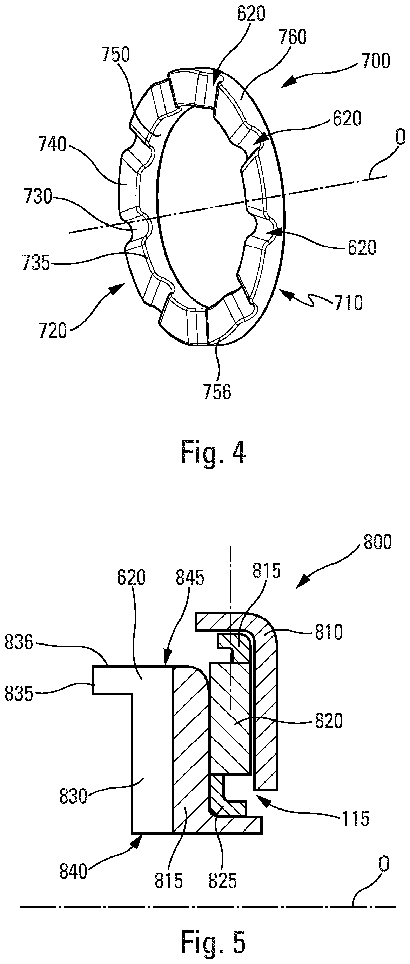

- la FIGURE 4 illustre une vue en perspective d'une bague intermédiaire telle que mise en oeuvre au travers de la FIGURE 2 ;
- la FIGURE 5 illustre un palier à aiguilles comprenant une partie d'extension radiale du conduit de refroidissement tel que mis en oeuvre au travers de la FIGURE 3.

Les figures 2 à 5 ne sont pas couvertes par l'étendu de protection de la revendication 1.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits peuvent être combinés entre eux si rien ne s'oppose à cette combinaison sur le plan technique.

Sur les figures, les éléments communs à plusieurs figures conservent la même référence.

On a représenté sur la FIGURE 1 un système de transmission 1 comprenant un mécanisme d'embrayage 10, notamment pour un véhicule automobile, présentant un axe principal de rotation O.

Dans les paragraphes qui suivent, le mécanisme d'embrayage 10 est présenté au travers de ses caractéristiques techniques et fonctionnelles communes à tous les modes de réalisation conformes au premier aspect de la présente invention. Les modes de réalisation seront décrits ensuite dans leurs spécificités et leurs différences par rapport à ces caractéristiques techniques et fonctionnelles communes. La FIGURE 1 sert de support à la description des caractéristiques techniques et fonctionnelles communes à tous les modes de réalisation du premier aspect de l'invention.

### Mode de réalisation général

Le mécanisme d'embrayage 10 illustré aux FIGURES 1 et suivantes est un double embrayage humide, dans une configuration dite radiale, le premier embrayage 100 étant situé préférentiellement à l'extérieur du deuxième embrayage 200.

Alternativement, le mécanisme d'embrayage 10 peut être configuré dans une position dite axiale, le premier embrayage 100 étant agencé axialement vers l'arrière et le deuxième embrayage 200 étant agencé axialement vers l'avant.

Alternativement encore, le mécanisme d'embrayage 10 peut être un double embrayage à sec.

Le mécanisme d'embrayage 10 à double embrayage humide est agencé pour pouvoir accoupler sélectivement l'arbre d'entrée à un premier arbre de transmission A1 ou à un deuxième arbre de transmission A2 par l'intermédiaire respectivement du premier embrayage 100 ou du deuxième embrayage 200.

L'arbre d'entrée est entrainé en rotation par au moins un vilebrequin 900 et couplé au vilebrequin 900 par l'intermédiaire d'un amortisseur de vibrations de torsion 800.

De préférence, le premier arbre de transmission A1 et le deuxième arbre de transmission A2 sont coaxiaux.

Le premier embrayage 100 et le deuxième embrayage 200 sont préférentiellement de type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de seconds éléments de friction 102.

Le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de seconds éléments de friction 102.

Le deuxième arbre de transmission A2 est couplé en rotation à l'arbre d'entrée et entraîné par lui en rotation lorsque le deuxième embrayage 200 est configuré dans une configuration embrayée pour laquelle la pluralité de premiers éléments de friction 201 est couplée en rotation à la pluralité de seconds éléments de friction 202.

Le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de seconds éléments de friction 202.

Dans le contexte de l'invention, les arbres de transmission A1 et A2 sont agencés pour pouvoir coopérer avec une transmission 400 telle que par exemple une boite de vitesses du type de celles équipant des véhicules automobiles.

Dans le mécanisme d'embrayage 10 à double embrayage humide illustré sur la FIGURE 1, le premier embrayage 100 est agencé pour engager les rapports impairs de la transmission 400 et le deuxième embrayage 200 est agencé pour engager les rapports pairs et la marche arrière de la transmission 400. Alternativement, les rapports pris en charge par lesdits premier embrayage 100 et deuxième embrayage 200 sont respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de l'état respectif des embrayages 100 et 200 et par l'intermédiaire d'un voile d'entrée 109.

Préférentiellement, les embrayages 100 et 200 sont agencés pour ne pas être simultanément dans la même configuration embrayée ou débrayée. Éventuellement, les premier et deuxième embrayages 100, 200 peuvent simultanément être configurés dans la position débrayée.

Le mécanisme d'embrayage 10 comporte autour de l'axe O au moins un élément d'entrée qui est lié en rotation à un arbre d'entrée non représenté. De préférence, l'élément d'entrée du mécanisme d'embrayage 10 comprend au moins un moyeu d'entrée 130. Sur son élongation intérieure, le moyeu d'entrée 130 est lié en rotation et/ou axialement à l'arbre d'entrée, éventuellement par l'intermédiaire d'un dispositif d'amortissement de vibration de torsion 800 tel qu'un double volant amortisseur par exemple.

Sur son élongation extérieure, le moyeu d'entrée 130 est couplé en rotation à un voile d'entrée 109, au niveau d'une extrémité intérieure située vers l'avant dudit voile d'entrée 109 ; préférentiellement ils sont solidaires, par exemple fixés par soudage et/ou par rivetage. Du côté de son extrémité extérieure, le voile d'entrée 109 est lié en rotation à un premier embrayage 100 par l'intermédiaire d'un porte-disques d'entrée 106, ledit porte-disques d'entrée 106 étant lié en rotation audit voile d'entrée 109, préférentiellement par coopération de formes, notamment du type cannelures.

Les premier et deuxième embrayages 100 et 200 sont commandés par un système de commande 300 comprenant un premier et un deuxième actionneur 320, 330. Le système de commande 300 comprend un carter 307 dont la partie extérieure 301 agencée pour recevoir éventuellement des moyens de fixation 310 coopérant avec la transmission 400. Le carter 307 du système de commande 300 comprend aussi une partie intérieure 302 présentant une élongation axiale agencée pour supporter les premier et deuxième actionneurs 320 et 330. Au niveau de sa partie située vers l'arrière, le système de commande 300 présente une face dite d'appui 304, préférentiellement plane, agencée pour réaliser un appui plan avec la transmission 400. La face d'appui 304 est préférentiellement située axialement vers l'arrière du système de commande 300.

Le carter 307 est préférentiellement réalisé de manière monobloc. Éventuellement, il peut être réalisé par assemblage de plusieurs pièces. Par exemple, le système de commande peut comprendre un support d'actionnement rapporté sur le carter et situé axialement au moins en partie entre le carter et le moyeu de sortie. Le support d'actionnement est au moins couplé en rotation avec le carter. Selon une variante de réalisation, le support d'actionnement est monté avec un jeu axial vis-à-vis de la transmission afin de garantir que le blocage axial entre le système de commande et la transmission soit réalisé au niveau dudit système de commande. Pour ce faire, le support d'actionnement peut par exemple être monté sans jeu radial dans un alésage du carter afin de réaliser un couplage en rotation entre le support d'actionnement et le carter du système de commande. Alternativement, le support d'actionnement peut être serti dans un alésage du carter.

De manière préférentielle, les premier et deuxième actionneurs 320 et 330 sont des vérins hydrauliques. Les premier et deuxième actionneurs 320, 330 peuvent chacun comprendre un piston annulaire. Le système de commande 300 comprend un premier et un deuxième canal d'alimentation en fluide hydraulique 321 et 331 pour les premier et deuxième actionneurs 320, 330. Préférentiellement, le fluide hydraulique est un fluide sous pression, par exemple de l'huile.

Le premier actionneur 320 est agencé pour configurer le premier embrayage 100 dans une position comprise entre la configuration embrayée et la position débrayée. Plus particulièrement, le premier actionneur 320 est mobile axialement, ici de l'arrière vers l'avant, entre la configuration embrayée et la configuration débrayée du premier embrayage 100.

Le premier actionneur 320 est lié au premier embrayage 100 par l'intermédiaire d'une part d'un premier palier 140 et d'autre part d'un premier organe de transmission de force 105.

Le premier palier 140 est agencé pour transmettre des efforts axiaux générés par le premier actionneur 320 au premier organe de transmission de force 105.

Le premier organe de transmission de force 105 est agencé pour transmettre un effort axial au niveau de son élongation extérieure 104 au premier embrayage 100, ladite élongation extérieure 104 s'étendant axialement vers l'avant pour pouvoir écarter ou presser les premiers éléments de friction 101 contre les deuxièmes éléments de friction 102 d'une part, et contre un moyen de réaction extérieur 103 du voile d'entrée 109 d'autre part.

Le moyen de réaction extérieur 103 est couplé en rotation au moyeu d'entrée 130 par l'intermédiaire du voile d'entrée 109. De préférence, le moyen de réaction extérieur 103 et le voile d'entrée 109 sont réalisés en une seule pièce, en variante en deux pièces fixées ensemble par tous moyens tels que par rivetage ou soudage.

Le moyen de réaction extérieur 103 a une forme complémentaire à celle des premiers ou deuxièmes éléments de friction, de manière à permettre un couplage par friction des premiers et deuxièmes éléments de friction 101, 102 lorsque le premier actionneur 320 exerce un effort axial vers l'avant pour configurer le premier embrayage 100 dans sa position embrayée. À titre d'exemple non limitatif, le moyen de réaction peut prendre la forme d'un disque qui s'étend radialement vers l'extérieur et dont une zone centrale s'étend axialement vers l'avant.

Le moyen de réaction extérieur 103 présente notamment une cannelure extérieure qui coopère avec une cannelure intérieure du voile d'entrée 109.

Le premier embrayage 100 est préférentiellement multidisques. Il comprend au moins un premier élément de friction 101, tel que par exemple un disque de friction. Les premiers éléments de friction 101 sont couplés en rotation au premier arbre de transmission A1 par l'intermédiaire d'un premier porte-disques de sortie 110 formant un élément de sortie du premier embrayage 100.

Le premier porte-disques de sortie 110 comporte sur sa périphérie radiale extérieure une élongation axiale 107 qui est munie d'une denture destinée à coopérer avec une denture complémentaire sur chaque premier élément de friction 101, et plus particulièrement à la périphérie radiale intérieure de chaque premier élément de friction 101. Le porte-disques de sortie est ainsi couplé en rotation par engrènement avec les premiers éléments de friction 101.

Au niveau de son extrémité radiale intérieure, le premier porte-disques de sortie 110 est lié à un premier moyeu de sortie 120. Le premier porte-disques de sortie 110 et le premier moyeu de sortie 120 sont préférentiellement fixés ensemble par soudage, en variante par rivetage.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Le premier embrayage 100 comprend aussi des moyens élastiques de rappel pour repousser automatiquement le premier actionneur 320 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 101, 102. Elles sont préférentiellement agencées radialement à l'intérieur des premiers éléments de friction 101. Chaque rondelle élastique de rappel est axialement en appui contre la face radiale avant d'un deuxième élément de friction 102 et contre la face radiale arrière d'un autre deuxième élément de friction 102 axialement adjacent.

Les moyens élastiques de rappel sollicitent axialement les deuxièmes éléments de friction afin de faciliter la libération des premiers éléments de friction 101 et le rappel du premier actionneur 320 vers la position débrayée.

En variante non représentée, les moyens de rappel du premier actionneur 320 sont formés par au moins un ressort de compression.

Le deuxième embrayage 200 du mécanisme d'embrayage 10 est de conception similaire à celle du premier embrayage 100, le deuxième embrayage 200 étant préférentiellement de type multidisques.

Avantageusement, on se reportera au besoin pour la description du deuxième embrayage 200 à la description détaillée du premier embrayage 100 donnée précédemment.

De manière comparable à la configuration décrite pour le premier embrayage 100, le deuxième actionneur 330 est agencé pour configurer le deuxième embrayage 200 dans une position comprise entre la configuration embrayée et la position débrayée.

Le deuxième actionneur 330 est lié au deuxième embrayage 200 par l'intermédiaire d'une part d'un deuxième palier 240 et d'autre part d'un deuxième organe de transmission de force 205.

Le deuxième actionneur comprend préférentiellement un piston annulaire monté axialement coulissant sur le carter 307 du système de commande.

Le deuxième palier 240 est agencé pour d'une part transmettre des efforts axiaux générés par le deuxième actionneur 330 au deuxième organe de transmission de force 205, et d'autre part pour supporter la charge radiale exercée par le premier organe de transmission de force 105.

Le deuxième organe de transmission de force 205 est agencé pour transmettre un effort axial au niveau de son élongation extérieure 204 au deuxième embrayage 200, ladite élongation extérieure 204 s'étendant axialement vers l'avant et au travers d'une ouverture 108 aménagée dans le porte-disques d'entrée 106 pour pouvoir écarter ou presser les premiers éléments de friction 201 contre les deuxièmes éléments de friction 202 d'une part, et contre un moyen de réaction intérieur 203.

Le moyen de réaction intérieur 203 est solidaire d'une partie d'élongation axiale 206 orientée vers l'avant et solidaire de le porte-disques d'entrée 106 par l'intermédiaire d'une partie d'extension radiale 208 qui est fixée au porte-disques d'entrée 106 par tous moyens, par exemple par soudage ou par rivetage. Alternativement, le moyen de réaction intérieur 203 et le porte-disques d'entrée 106 sont réalisés en une seule pièce.

Le deuxième organe de transmission de force 205 est situé axialement entre le porte-disques d'entrée 106 et le premier organe de transmission de force 105.

Sur sa partie intérieure, le deuxième organe de transmission de force 205 comprend un alésage 212 afin de laisser un espace intérieur pour ne pas réaliser un appui radial sur le système de commande 300 ou sur l'un des arbres de transmission A1, A2.

Le moyen de réaction intérieur 203 a une forme complémentaire à celle des premiers ou deuxièmes éléments de friction 201, 202, de manière à permettre un couplage par friction des premiers et deuxièmes éléments de friction 201, 202 lorsque le deuxième actionneur 330 exerce un effort axial vers l'avant pour configurer le deuxième embrayage 200 dans sa position embrayée. À titre d'exemple non limitatif, le moyen de réaction intérieur 203 peut prendre la forme d'un anneau avec une denture sur le pourtour extérieur et une gorge centrale d'appui qui s'étend axialement vers l'arrière.

Le deuxième embrayage 200 est préférentiellement multidisques. Il comprend au moins un premier élément de friction 201, tel que par exemple un disque de friction. Les premiers éléments de friction 201 sont couplés en rotation au deuxième arbre de transmission A2 par l'intermédiaire d'un deuxième porte-disques de sortie 210 formant un élément de sortie du deuxième embrayage 200.

Le deuxième porte-disques de sortie 210 comporte à sa périphérie radiale extérieure une élongation axiale 207 qui est munie d'une denture destinée à coopérer avec une denture complémentaire sur chaque premier élément de friction 201, et plus particulièrement à la périphérie radiale intérieure de chaque premier élément de friction 201. Le deuxième porte-disques de sortie est ainsi couplé en rotation par engrènement avec les premiers éléments de friction 201.

Au niveau de son extrémité radiale intérieure, le deuxième porte-disques de sortie 210 est lié à un deuxième moyeu de sortie 220. Le deuxième porte-disques de sortie 210 et le deuxième moyeu de sortie 220 sont préférentiellement fixés ensemble par soudage, en variante par rivetage.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Préférentiellement, le deuxième arbre de transmission A2 prend la forme d'un cylindre creux à l'intérieur duquel le premier arbre de transmission A1 peut être inséré.

Le deuxième embrayage 200 comprend aussi des moyens élastiques de rappel pour repousser automatiquement le deuxième actionneur 330 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 201, 202. Elles sont préférentiellement agencées radialement à l'intérieur des premiers éléments de friction 201. Chaque rondelle élastique de rappel est axialement en appui contre la face radiale avant d'un deuxième élément de friction 202 et contre la face radiale arrière d'un autre deuxième élément de friction 202 axialement adjacent.

Les moyens élastiques de rappel sollicitent axialement les deuxièmes éléments de friction afin de faciliter la libération des premiers éléments de friction 201 et le rappel du deuxième actionneur 330 vers la position débrayée.

En variante non représentée, les moyens de rappel du deuxième actionneur 330 sont formés par au moins un ressort de compression.

Le porte-disques d'entrée 106 comprend en outre un segment dit intérieur 111 qui s'étend radialement vers l'intérieur du mécanisme d'embrayage 10 au niveau de l'ouverture 108 et axialement vers l'avant. À son extrémité intérieure, le segment intérieur 111 du porte-disques d'entrée 106 prend appui sur un talon 118 en appui radial sur un palier à roulements 113 agencé pour supporter la charge radiale du porte-disques d'entrée 106.

Radialement, le palier à roulements 113 est lié solidairement à un support d'embrayage 500 situé dans une position axiale intermédiaire entre le système de commande 300 et les premier et deuxième moyeux de sortie 120, 220.

Axialement, la position du palier à roulements 113 est définie vers l'avant par une butée 114. La butée 114 peut préférentiellement être un anneau de blocage ou anneau d'arrêt. Par ailleurs, la butée 114 peut préférentiellement être logée dans une gorge réalisée sur la surface périphérique du support d'embrayage 500.

D'une manière plus générale, le palier à roulements 113 est disposé radialement entre le support d'embrayage 500 et le porte-disques d'entrée 106. Axialement, le palier à roulements 113 est arrêté axialement par un anneau d'arrêt 114 disposé du côté opposé à l'effort axial exercé par premier ou deuxième actionneur 320, 330.

Avantageusement, le palier à roulements 113 est un roulement à billes à contacts obliques afin de pouvoir transmettre à la fois un effort axial et un effort radial. Cet effort axial est, au niveau du palier à roulements 113, repris par l'anneau d'arrêt 114. En effet, lorsque le premier ou le deuxième actionneur 320, 330 transmet un effort axial au premier ou deuxième organe de force 105, 205 afin de configurer l'embrayage 100, 200 correspondant dans une configuration embrayée ou débrayée, un effort axial est transmis entre une première extrémité comprenant ledit premier ou deuxième actionneur 320, 330 et une deuxième extrémité située au niveau de l'arbre de la transmission A1, A2.

Le mécanisme d'embrayage 10 comprend par ailleurs au moins un conduit de refroidissement 600 agencé pour faire circuler un fluide de refroidissement vers l'embrayage 100, 200, le ou les conduits de refroidissement 600 comprenant une partie d'extension axiale 610 et au moins une partie d'extension radiale 620.

De manière commune à tous les modes de réalisation de l'invention, la partie d'extension axiale 610 du conduit de refroidissement 600 est située radialement entre la face intérieure 501 du support d'embrayage 500 et une face extérieure 901 de l'arbre de la transmission A2 situé radialement le plus à l'extérieur. La partie d'extension axiale 610 du conduit de refroidissement 600 comprend :
- un premier tronçon 410 situé radialement entre une face intérieure 401 de la transmission 400 et une face extérieure 901 de l'arbre de la transmission A2. De manière avantageuse, le premier tronçon 410 est formé par un alésage d'orientation axiale traversant la transmission 400 de part en part au niveau de son extrémité radiale intérieure ;
- un deuxième tronçon 510 situé radialement entre une première face intérieure 501 du support d'embrayage 500 et une face extérieure 901 de l'arbre de la transmission A2. De manière avantageuse, le premier tronçon 510 est formé par un alésage d'orientation axiale traversant le support d'embrayage 500 de part en part au niveau de son extrémité radiale intérieure ;
- au niveau de son extrémité axiale avant, la partie d'extension axiale 610 du conduit de refroidissement 600 comprend un troisième tronçon 520 formé par un alésage dont l'extension radiale est supérieure à celle du deuxième tronçon : la face extérieure 502 de la partie d'extension axiale 610 prise au niveau de son extrémité axiale avant est située plus à l'extérieur que la face intérieure 501 du support d'embrayage 500 prise au niveau du deuxième tronçon. Cet élargissement de l'alésage au niveau de l'extrémité axiale avant du support d'embrayage 500 permet aussi d'introduire le deuxième moyeu de sortie 220 pour son couplage en rotation avec l'arbre de la transmission A2.

Ainsi, l'invention conforme à son premier aspect propose de tirer avantage de l'espace annulaire situé entre le support d'embrayage et l'arbre de la transmission A2 pour y faire circuler le fluide de refroidissement. Cette configuration avantageuse permet de simplifier la fabrication du support d'embrayage qui n'intègre plus des alésages complexes pour la circulation du fluide de refroidissement.

Différents modes de réalisation vont maintenant être décrits, au travers de plusieurs configurations non limitatives de conduits de refroidissement 600 dans le mécanisme d'embrayage 10, et plus particulièrement au travers plusieurs configurations de parties d'élongations radiales 620 du conduit de refroidissement 600.

Afin de faciliter la compréhension des différents modes de réalisation, seules certaines des spécificités et des différences techniques et fonctionnelles de chaque mode de réalisation seront décrites, en comparaison au mode de réalisation général décrit précédemment au travers de la FIGURE 1.

### Premier mode de réalisation

Dans le premier mode de réalisation décrit au travers de la FIGURE 1, le conduit de refroidissement 600 comprend une partie d'extension radiale 620 située entre le palier support 113 et le deuxième moyeu de sortie 220 afin d'orienter préférentiellement le fluide de refroidissement en direction des premiers et deuxièmes embrayages 100, 200. Plus particulièrement, l'extrémité radialement à l'extérieur de la partie d'extension radiale 620 débouche au-delà du support d'embrayage 500 entre le deuxième porte-disques de sortie 210 et le porte-disques d'entrée 106.

Dans ce mode de réalisation, la partie d'extension radiale 620 prend la forme d'un alésage réalisé dans le support d'embrayage 500. L'alésage formant la partie d'extension radiale 620 a un diamètre constant entre son extrémité intérieure et son extrémité extérieure. Vers l'intérieur, l'alésage débouche dans le troisième tronçon 520 de la partie d'extension axiale 610 du conduit de refroidissement 600.

L'alésage formant la partie d'extension radiale 620 est sensiblement orienté vers l'avant du support d'embrayage 500 : l'extrémité extérieure de la partie d'extension radiale 620 est située plus en avant que l'extrémité intérieure de la partie d'extension radiale 620. Plus particulièrement, l'alésage formant la partie d'extension radiale 620 est orienté suivant un angle α d'environ 30° par rapport à un axe perpendiculaire à l'axe de rotation O.

### Deuxième mode de réalisation

La FIGURE 2 illustre un deuxième mode de réalisation dans lequel une bague intermédiaire 700 jouant le rôle de palier axial est localisée axialement entre le support d'embrayage 500 et le deuxième moyeu de sortie 220, la bague intermédiaire 700 comprenant des conduits radiaux permettant de transférer le fluide de refroidissement en direction des premier et deuxième embrayages 100, 200.

Plus particulièrement, une face arrière 710 de la bague intermédiaire 700 est en appui plan avec une face avant 503 du support d'embrayage 500 ; et une face avant 720 de la bague intermédiaire 700 est en appui plan avec une face arrière 133 du deuxième moyeu de sortie.

Le support d'embrayage peut comprendre avantageusement un épaulement axial 504 agencé pour définir radialement la position de la bague intermédiaire 700, une des faces extérieure ou intérieure de la bague intermédiaire 700 venant en appui radial contre l'épaulement axial 504. L'épaulement axial 504 est préférentiellement situé radialement à l'intérieur par rapport à la bague intermédiaire 700, l'épaulement axial 504 formant une portée circonférentielle orientée vers l'avant sur une partie intérieure de la face avant du support d'embrayage 500.

Alternativement, l'épaulement axial 504 peut être situé radialement à l'extérieur par rapport à la bague intermédiaire 700, en formant une portée circonférentielle orientée vers l'avant sur une partie extérieure de la face avant du support d'embrayage 500.

En référence à la FIGURE 4, la bague intermédiaire prend la forme d'une bague annulaire délimitée radialement vers l'extérieur par une face extérieure annulaire 760 et vers l'intérieur par une face intérieure annulaire 750. Le diamètre de la face extérieure annulaire 760 est avantageusement comparable au diamètre extérieur du support d'embrayage 500. Le diamètre de la face extérieure annulaire 760 est alternativement égal, légèrement inférieur ou légèrement supérieur au diamètre extérieur du support d'embrayage 500. Dans le cas où l'épaulement axial 504 est situé sur la partie intérieure de la face avant du support d'embrayage, comme illustré dans la FIGURE 2, le diamètre de la face intérieure annulaire 750 de la bague intermédiaire 700 est égal au diamètre extérieur de l'épaulement axial 504 afin de réaliser le positionnement radial de la bague intermédiaire 700. Dans ce cas, la face intérieure annulaire 750 est en appui contre la face extérieure de l'épaulement axial 504.

Dans le cas où l'épaulement axial 504 est situé sur la partie extérieure de la face avant du support d'embrayage, le diamètre de la face extérieure annulaire 760 de la bague intermédiaire 700 est égal au diamètre intérieur de l'épaulement axial 504 afin de réaliser le positionnement radial de la bague intermédiaire 700. Dans ce cas, la face extérieure annulaire 760 est en appui contre la face intérieure de l'épaulement axial 504. Le diamètre de la face intérieure annulaire 760 est alors avantageusement comparable au diamètre intérieur du support d'embrayage 500. Le diamètre de la face intérieure annulaire 750 est alternativement égal, légèrement inférieur ou légèrement supérieur au diamètre intérieur du support d'embrayage 500.

La face arrière 710 de la bague intermédiaire 700 est avantageusement plane de manière à pouvoir réaliser un appui plan avec la face avant du support d'embrayage 500, ou avec la face arrière du deuxième moyeu de sortie 220.

La face avant 720 de la bague annulaire comprend une pluralité de conduits d'extensions radiales 730 formant collectivement les parties d'extension radiales 620 du ou des conduits de refroidissement 600. Les conduits d'extension radiales 730 sont préférentiellement régulièrement espacés autour de l'axe O. Dans l'exemple illustré sur la FIGURE 4, la bague intermédiaire comprend neuf conduits d'extensions radiales 730, l'angle entre deux conduits d'extensions radiales 730 adjacents étant sensiblement de 40°.

Chaque conduit d'extension radiale 730 a un profil transverse en U. En d'autres termes, chaque conduit d'extension radiale 730 forme une goulotte permettant l'écoulement du fluide de refroidissement. Les conduits d'extensions radiales 730 sont axialement fermés par l'appui plan de la face avant 720 de la bague intermédiaire contre une face du mécanisme d'embrayage 10, telle que par exemple la face avant du support d'embrayage 500 ou la face arrière du deuxième moyeu de sortie 220.

Selon un mode de réalisation particulier, on peut former un conduit d'extension radiale dont la section transverse est sensiblement circulaire par la mise en contact face à face de deux bagues intermédiaires 700 en appui selon leur face avant 720 respectives et angulairement alignées de manière à ce que chaque conduit d'extension radiale 730 d'une première bague intermédiaire 700 soit placé en regard d'un conduit d'extension radiale 730 d'une deuxième bague intermédiaire 700.

La face avant 720 de la bague intermédiaire 700 comprend une pluralité de tronçon 740 situés entre deux conduits d'extensions radiales 730 adjacents. Ces tronçons forment collectivement une surface d'appui de la face avant 720 de la bague intermédiaire contre une face du mécanisme d'embrayage 10, telle que par exemple la face avant du support d'embrayage 500 ou une face du palier 115 ou la face arrière du deuxième moyeu de sortie 220.

La bague intermédiaire 700 comprend aussi sur sa face avant 720 un chanfrein extérieur 736 et un chanfrein intérieur 735 afin de faciliter le montage de la bague intermédiaire sur le mécanisme d'embrayage 10.

### Troisième mode de réalisation

La FIGURE 3 illustre un troisième mode de réalisation dans lequel le palier 115 situé entre le support d'embrayage 500 et le deuxième moyeu de sortie 220 comprend une partie d'extension radiale du conduit de refroidissement. Complémentairement, la FIGURE 5 illustre le palier 115 prenant la forme d'un palier à aiguilles comprenant une partie d'extension radiale 620 du conduit de refroidissement 600 tel que mis en oeuvre au travers de la FIGURE 3.

De manière schématique, le troisième aspect consiste en une intégration fonctionnelle de la bague intermédiaire 700 dans le palier 115. Plus particulièrement, le palier à aiguilles 115 comprend un rouleau 830 bloqué axialement à l'intérieur d'une cage formée par une première paroi 810 et une deuxième paroi 815, au moins une des première 810 ou deuxième 815 parois comprenant une pluralité de conduits d'extension radiales 830 formant collectivement les parties d'extension radiale 620 du conduit de refroidissement 600. Dans l'exemple illustré sur la FIGURE 5, seule la deuxième paroi 815 du palier à aiguilles 115 comprend les conduits d'extension radiales 830.

Chaque conduit d'extension radiale 830 est préférentiellement formé par un alésage radial permettant au fluide de refroidissement de traverser radialement le palier à aiguilles 115. Chaque conduit de d'extension radiale 830 s'étend radialement entre une face intérieure 840 et une face extérieure 845 du palier à aiguilles 115. La pluralité des conduits d'extensions radiales 830 est préférentiellement régulièrement angulairement espacée autour de l'axe O.

Dans l'exemple illustré sur la FIGURE 3, les conduits d'extensions radiales 830 du palier à aiguilles 115 sont situés vers l'arrière, c'est-à-dire du côté du support d'embrayage 500. Alternativement, les conduits d'extensions 830 du palier à aiguilles 115 sont situés vers l'avant, c'est-à-dire du côté du deuxième moyeu de sortie 220.

De manière comparable au deuxième mode de réalisation, le support d'embrayage 500 comprend un épaulement axial 504 agencé pour définir radialement la position du palier à aiguilles 115. Le palier à aiguilles comprend un épaulement axial de centrage 835 qui collabore avec un épaulement axial 504 du support d'embrayage 500. L'épaulement axial 504 forme une portée circonférentielle orientée vers l'avant sur une partie intérieure de la face avant du support d'embrayage 500, une face intérieure de l'épaulement axial de centrage 835 du palier à aiguilles 115 venant en appui radial contre l'épaulement axial 504.

Dans l'exemple illustré sur la FIGURE5, l'épaulement axial 504 est situé sur la partie extérieure de la face avant 503 du support d'embrayage 500, et le diamètre de la face extérieure 836 de l'épaulement axial de centrage 835 est égal au diamètre intérieur de l'épaulement axial 504 afin de réaliser le positionnement radial du palier à aiguilles 115.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux, dans la limite de l'étendu défini par les revendications.

## Revendications

1. Mécanisme d'embrayage (10) destiné à être installé entre un moteur et une transmission de véhicule automobile, le mécanisme d'embrayage comprenant :
- au moins un embrayage (100, 200) en rotation autour d'un axe O ;
- un système de commande (300) de l'embrayage (100, 200) comprenant :
∘ un carter (307) ; et
∘ au moins un piston annulaire (320, 330) agencé pour se déplacer axialement par rapport au carter (307) afin d'embrayer ou de débrayer l'embrayage (100, 200) par l'intermédiaire d'au moins un palier de transmission (140, 240) ;
- un support d'embrayage (500) agencé pour supporter radialement l'embrayage (100, 200) par l'intermédiaire d'un palier support (113), le support d'embrayage (500) étant situé dans une position axialement intermédiaire entre le système de commande (300) et un moyeu de sortie (120, 220) du mécanisme d'embrayage (1) ;
- au moins un conduit de refroidissement agencé pour faire circuler un fluide de refroidissement vers l'embrayage (100, 200), chaque conduit de refroidissement comprenant une partie d'extension axiale et au moins une partie d'extension radiale ;
**caractérisé en ce que** la partie d'extension axiale de chaque conduit de refroidissement est située radialement entre un arbre de transmission (A2) et une face intérieure du support d'embrayage (500), et au moins une partie d'extension radiale de chaque conduit de refroidissement est située axialement entre le palier support (113) et le moyeu de sortie (120, 220),
et **en ce que** la partie d'extension radiale est formée par au moins un alésage traversant de part en part et ménagé dans le support d'embrayage (500).

2. Mécanisme d'embrayage (10) selon la revendication précédente, dans lequel chaque embrayage (100, 200) comprend une pluralité d'éléments de friction liés solidairement en rotation à un arbre d'entrée, le mécanisme d'embrayage (10) étant **caractérisé en ce que** la partie d'extension radiale est située axialement dans un plan perpendiculaire à l'axe O et passant par au moins une partie de la pluralité d'éléments de friction.

3. Mécanisme d'embrayage (10) selon l'une quelconque des revendications précédentes, **caractérisé en ce qu'**une extrémité extérieure de la partie d'extension radiale est axialement située entre un porte-disque de sortie (110, 210) et un porte-disque d'entrée (106).

4. Mécanisme d'embrayage (10) selon l'une quelconque des revendications précédentes, **caractérisé en ce que** la partie d'extension radiale est orientée en direction des éléments de friction de l'embrayage (100, 200).

5. Mécanisme d'embrayage (10) selon la revendication 4, **caractérisé en ce que** la partie d'extension radiale est orientée selon un angle compris entre -45° et 45° par rapport à un axe perpendiculaire à l'axe de rotation O.

6. Mécanisme d'embrayage (10) selon l'une quelconque des revendications précédentes, dans lequel la partie d'extension radiale située entre le palier support (113) et le moyeu de sortie (120, 220) est une première partie d'extension radiale, **caractérisé en ce que** le conduit de refroidissement comprend une deuxième partie d'extension radiale située entre le palier support (113) et le système de commande (300).

7. Mécanisme d'embrayage (10) selon la revendication précédente, **caractérisé en ce que** la deuxième partie d'extension radiale est formée par un alésage traversant ménagé dans le support d'embrayage (500).

8. Mécanisme d'embrayage (10) selon l'une quelconque des revendications 6 ou 7, **caractérisé en ce que** le porte-disques d'entrée (106) du mécanisme d'embrayage (10) comprend au moins une ouverture radiale située dans un plan perpendiculaire à l'axe O et passant par au moins une partie de la pluralité des éléments de friction.

9. Système de transmission (1) pour véhicule automobile, **caractérisé en ce qu'**il comprend :
- une enceinte étanche dans laquelle est logé le mécanisme d'embrayage (10) selon l'une quelconque des revendications précédentes ;
- une pompe agencée d'une part pour pomper le fluide de refroidissement contenu dans l'enceinte étanche, et d'autre part pour injecter le fluide de refroidissement dans le conduit de refroidissement ; et
- un élément de filtration agencé pour filtrer le fluide de refroidissement pompé par la pompe avant d'être réinjecté dans le conduit de refroidissement.

## Patentansprüche

1. Kupplungsmechanismus (10), der dazu bestimmt ist, zwischen einem Motor und einem Getriebe eines Kraftfahrzeugs eingebaut zu werden, wobei der Kupplungsmechanismus enthält:
- mindestens eine um eine Achse 0 drehende Kupplung (100, 200);
- ein Steuersystem (300) der Kupplung (100, 200), das enthält:
o ein Gehäuse (307); und
o mindestens einen Ringkolben (320, 330), der eingerichtet ist, um sich axial bezüglich des Gehäuses (307) zu verschieben, um die Kupplung (100, 200) mittels mindestens eines Antriebslagers (140, 240) ein- oder auszurücken;
- einen Kupplungsträger (500), der eingerichtet ist, um die Kupplung (100, 200) mittels eines Traglagers (113) radial zu tragen, wobei der Kupplungsträger (500) sich in einer axialen Zwischenstellung zwischen dem Steuersystem (300) und einer Ausgangsnabe (120, 220) des Kupplungsmechanismus (1) befindet;
- mindestens einen Kühlkanal, der eingerichtet ist, um ein Kühlfluid zur Kupplung (100, 200) fließen zu lassen, wobei jeder Kühlkanal einen Teil axialer Ausdehnung und mindestens einen Teil radialer Ausdehnung enthält;
**dadurch gekennzeichnet, dass** der Teil axialer Ausdehnung jedes Kühlkanals sich radial zwischen einer Antriebswelle (A2) und einer Innenseite des Kupplungsträgers (500) und mindestens ein Teil radialer Ausdehnung jedes Kühlkanals sich axial zwischen dem Traglager (113) und der Ausgangsnabe (120, 220) befindet,
und dass der Teil radialer Ausdehnung von mindestens einer vollständigen Durchbohrung gebildet wird, die im Kupplungsträger (500) eingerichtet ist.

2. Kupplungsmechanismus (10) nach dem vorhergehenden Anspruch, wobei jede Kupplung (100, 200) eine Vielzahl von Reibelementen enthält, die drehfest mit einer Eingangswelle verbunden sind, wobei der Kupplungsmechanismus (10) **dadurch gekennzeichnet ist, dass** der Teil radialer Ausdehnung sich axial in einer Ebene lotrecht zur Achse 0 befindet und durch mindestens einen Teil der Vielzahl von Reibelementen geht.

3. Kupplungsmechanismus (10) nach einem der vorhergehenden Ansprüche, **dadurch gekennzeichnet, dass** ein äußeres Ende des Teils radialer Ausdehnung sich axial zwischen einem Ausgangsscheibenträger (110, 210) und einem Eingangsscheibenträger (106) befindet.

4. Kupplungsmechanismus (10) nach einem der vorhergehenden Ansprüche, **dadurch gekennzeichnet, dass** der Teil radialer Ausdehnung in Richtung der Reibelemente der Kupplung (100, 200) ausgerichtet ist.

5. Kupplungsmechanismus (10) nach Anspruch 4, **dadurch gekennzeichnet, dass** der Teil radialer Ausdehnung gemäß einem Winkel ausgerichtet ist, der zwischen -45° und 45° bezüglich einer Achse lotrecht zur Drehachse 0 liegt.

6. Kupplungsmechanismus (10) nach einem der vorhergehenden Ansprüche, wobei der zwischen dem Traglager (113) und der Ausgangsnabe (120, 220) befindliche Teil radialer Ausdehnung ein erster Teil radialer Ausdehnung ist, **dadurch gekennzeichnet, dass** der Kühlkanal einen zweiten Teil radialer Ausdehnung enthält, der sich zwischen dem Traglager (113) und dem Steuersystem (300) befindet.

7. Kupplungsmechanismus (10) nach dem vorhergehenden Anspruch, **dadurch gekennzeichnet, dass** der zweite Teil radialer Ausdehnung von einer im Kupplungsträger (500) ausgesparten Durchbohrung gebildet wird.

8. Kupplungsmechanismus (10) nach einem der Ansprüche 6 oder 7, **dadurch gekennzeichnet, dass** der Eingangsscheibenträger (106) des Kupplungsmechanismus (10) mindestens eine radiale Öffnung enthält, die sich in einer Ebene lotrecht zur Achse 0 befindet und durch mindestens einen Teil der Vielzahl von Reibelementen verläuft.

9. Antriebssystem (1) für ein Kraftfahrzeug, **dadurch gekennzeichnet, dass** es enthält:
- einen dichten Raum, in dem der Kupplungsmechanismus (10) nach einem der vorhergehenden Ansprüche untergebracht ist;
- eine Pumpe, die einerseits eingerichtet ist, um das im dichten Raum enthaltene Kühlfluid zu pumpen, und andererseits, um das Kühlfluid in den Kühlkanal einzuspeisen; und
- ein Filterelement, das eingerichtet ist, um das von der Pumpe gepumpte Kühlfluid zu filtern, ehe es wieder in den Kühlkanal eingespeist wird.

## Claims

1. A clutch mechanism (10) designed to be installed between an engine and a motor vehicle transmission, wherein the clutch mechanism comprises:
- at least one clutch (100, 200) rotating around an axis 0;
- a control system (300) of the clutch (100, 200) comprising:
∘ a case (307); and
∘ at least one annular piston (320, 330) arranged to be displaced axially relative to the case (307) in order to engage or disengage the clutch (100, 200) by way of at least one transmission bearing (140, 240);
- a clutch support (500) arranged to support the clutch (100, 200) radially by way of a support bearing (113), wherein the clutch support (500) is situated in a position axially intermediate between the control system (300) and an output hub (120, 220) of the clutch mechanism (1):
- at least one cooling duct arranged to make a cooling fluid circulate toward the clutch (100, 200), wherein each cooling duct comprises an axially extending part and at least one radially extending part;
**characterized in that** the axially extending part of each cooling duct is situated radially between a transmission shaft (A2) and an interior face of the clutch support (500), and at least one radially extending part of each cooling duct is situated axially between the support bearing (113) and the output hub (120, 220)
and **in that** the radially extending part is formed by a bore passing from one side to the other and made in the clutch support (500).

2. A clutch mechanism (10) according to the preceding claim, wherein each clutch (100, 200) comprises a plurality of first friction elements connected rigidly in rotation with an input shaft and the clutch mechanism (10) is **characterized in that** the radially extending part is situated axially in a plane perpendicular to axis 0 and passing through at least part of the plurality of friction elements.

3. A clutch mechanism (10) according to any one of the preceding claims, **characterized in that** an exterior end of the radially extending part is situated axially between an output disk carrier (110, 210) and an input disk carrier (106).

4. A clutch mechanism (10) according to any one of the preceding claims, **characterized in that** the radially extending part is oriented in the direction of the friction elements of the clutch (100, 200).

5. A clutch mechanism (10) according to claim 4, **characterized in that** the radially extending part is oriented at an angle of between -45° and 45° relative to an axis perpendicular to the axis of rotation 0.

6. A clutch mechanism (10) according to any one of the preceding claims, wherein the radially extending part situated between the support bearing (113) and the output hub (120, 220) is a first radially extending part, **characterized in that** the cooling duct comprises a second radially extending part situated between the support bearing (113) and the control system (300).

7. A clutch mechanism (10) according to the preceding claim, **characterized in that** the second radially extending part is formed by a through bore made in the clutch support (500).

8. A clutch mechanism (10) according to any one of claims 6 or 7, **characterized in that** the input disk carrier (106) of the clutch mechanism (10) comprises at least one radial opening situated in a plane perpendicular to axis 0 and passing through at least part of the plurality of the friction elements.

9. A motor vehicle transmission system (1), **characterized in that** it comprises:
- a leak-tight enclosure in which the clutch mechanism (10) according to any one of the preceding claims is housed;
- a pump arranged on the one hand to pump the cooling fluid contained in the leak-tight enclosure and on the other hand to inject the cooling fluid into the cooling duct; and
- a filtration element arranged to filter the cooling fluid pumped by the pump before it is reinjected into the cooling duct.
